# EUROPEAN PATENT APPLICATION

(11) **EP 2 942 297 A1**
(43) Date of publication of application: **11.11.2015**
(21) Application number: 15380013.1
(22) Date of filing: 24.04.2015
(51) Int. Cl.: B65B 43/46, B65B 59/00

(54) **CLAMP-HOLDING CARRIAGE FOR AN AUTOMATIC HORIZONTAL FLEXIBLE CONTAINER FORMING AND FILLING MACHINE**

(30) Priority: 05.05.2014 ES 201430652
(71) Applicant: Mespack, S.L., 08130 Santa Perpètua de Mogoda (Barcelona) (ES)
(72) Inventor: Mora Flores, Francisco, 08100 Mollet del Vallès (Barcelona) (ES); Fité Sala, Menna, 08130 Santa Perpètua de Mogoda (Barcelona) (ES); Marti Roche, Enric, 08950 Esplugues de Llobregat (Barcelona) (ES)
(74) Representative: Juncosa Miro, Jaime

(57) **Abstract**

The clamp-holding carriage comprises a carriage body (1) that is elongated in a longitudinal direction, having an upper surface (1a); side surfaces (1b) forming acute angles with said upper surface (1a), a lower surface (1c) and side skirts (2) extending downwardly from lower ends of the side surfaces (1b). Transverse clamping members (20) are fixed to the side surfaces (1b) of the carriage body (1) by securing pawls (21a, 22a). A guide profile (3) parallel to the longitudinal direction is fixed to the lower surface (1c) of the carriage body (1) between skirts (2). The carriage body (1), including the upper, side and lower surfaces (1a, 1b, 1c) and the skirts (2), is made of a single polymer-impregnated carbon fiber part. The clamping members (20) are preferably made of plastic.

## Description

### Field of the Art

The present invention relates to a clamp-holding carriage for an automatic horizontal flexible container forming and filling machine, which is configured for supporting clamping members and being installed in cooperation with mechanisms providing it with combined reciprocating and rocking movements in relation to another similar parallel clamp-holding carriage similarly installed and provided with simultaneous reciprocating movements and symmetrical rocking movements.

### State of the Art

Automatic horizontal container forming and filling machines are known to essentially comprise a web feeding unit feeding a web of flexible heat-seal film from a reel, a container forming unit forming individual flexible containers from said web of flexible film, a filling unit filling the individual flexible containers with one or more products, and a closing unit closing the filled flexible containers and delivering them to an output conveyor.

Such machines comprise a device for supporting and transporting individual flexible containers comprising two parallel clamp-holding carriages which are elongated in a longitudinal direction and installed in a sliding manner on respective guides parallel to said longitudinal direction, supported on respective supporting rocker arms. The clamp-holding carriages carry transversely fixed thereto respective clamping members facing one another forming a plurality of clamps foreseen for holding individual flexible containers. A reciprocating mechanism imparts simultaneous and alternating forward and backward movements in the longitudinal direction to the clamp-holding carriages and a rocking mechanism imparts opposing rocking movements to the supporting rocker arms transmitting opening and closing movements to the clamp-holding carriages in a transverse direction.

The reciprocating and rocking mechanisms are controlled to perform successive conveying cycles in which the clamp-holding carriages first perform a closing movement to grip a group of individual flexible containers, then a forward movement to convey the group of individual flexible containers, then an opening movement to release the group of individual flexible containers, and finally a backward movement to again be arranged in a situation for gripping another group of individual flexible containers, and so forth.

These clamp-holding carriages of the state of the art are conventionally made from a carriage body elongated in the longitudinal direction, made of a metal material such as steel or aluminum, on which there is fixed a bent sheet metal part made of stainless steel, for example, having an upper surface, side surfaces forming acute angles with said upper surface for receiving securing pawls of the clamping members, and skirts extending downwardly from lower ends of said side surfaces. Furthermore, a guide profile, which is typically a commercially available metal component, is longitudinally fixed to a lower surface of the carriage body between the skirts of the sheet metal part.

In turn, each of the clamping members of the state of the art comprises a front element having a first securing pawl and a rear element having a second securing pawl connected to one another by means of a screw or the like, and both front and rear elements are made of a metal material, such as machined steel or aluminum.

A drawback of this type of construction of the clamp-holding carriage of the state of the art using metal parts is that the clamp-holding carriage, together with the clamping members fixed thereto, has a significantly large mass which, combined with the frequent and high accelerations to which the clamp-holding carriage is subjected in order to perform its closing, forward, opening and backward movements, produces high inertial forces which make necessary to construct the reciprocating and rocking mechanisms in a proportionally robust manner, which entails a relatively high economic cost.

### Disclosure of the Invention

The object of the present invention is to mitigate the preceding drawback by providing a clamp-holding carriage for an automatic horizontal flexible container forming and filling machine comprising a carriage body that is elongated in a longitudinal direction, having an upper surface, side surfaces forming acute angles with said upper surface, and skirts extending downwardly from lower ends of said side surfaces, clamping members fixed transversely to said side surfaces of the carriage body by securing pawls, and a guide profile parallel to said longitudinal direction fixed to a lower surface of the carriage body between said skirts. The mentioned guide profile is configured for being slidingly coupled to guiding bases supported in supporting rocker arms provided with rocking movement with respect to an axis parallel to the longitudinal direction.

The carriage body of the clamp-holding carriage of the present invention, including the upper surface, side surfaces and skirts, is made of a single polymer-impregnated carbon fiber part, making the carriage body extremely lightweight in contrast with great rigidity and strength. Therefore, the small mass of the carriage body of the clamp-holding carriage of the present invention reduces inertial forces and allows a more lightweight, compact and cost-effective design of the reciprocating and rocking mechanisms compared to the state of the art.

Furthermore, the polymer-impregnated carbon fiber is a material that is extremely resistant to chemical etching by acids, bleaches, fats, etc., which makes it very suitable for the clamp-holding carriage of the present invention since the liquids or other materials to be packaged by the horizontal flexible container forming and filling machine often have one or more of these chemical products.

Each of the clamping members fixed to the carriage body of the clamp-holding carriage of the present invention conventionally comprises a front element having a first securing pawl and a rear element having a second securing pawl. Nevertheless, in the clamp-holding carriage of the present invention, said front element including the first securing pawl is preferably made of a first molded plastic part, and said rear element including the second securing pawl is preferably made of a second molded plastic part, which adds lightness to the clamp-holding carriage. Alternatively, only one of the front and rear elements of the clamping members could be made of molded plastic.

The carriage body optionally has attached thereto along its upper surface a thin foil strip having position indications marked at regular intervals along same which can be used like a ruler to position the clamping members on the carriage body. This foil strip can be made of a metal material, such as for example stainless steel, and nevertheless it has a virtually negligible mass by virtue of its thinness, although the foil strip being made of other materials including plastics is not ruled out.

### Brief Description of the Drawings

The foregoing and other features and advantages will be better understood based on the following detailed description of a merely illustrative and non-limiting embodiment with reference to the accompanying drawings, in which:
Figure 1 is a cross-section view of a clamp-holding carriage for an automatic horizontal flexible container forming and filling machine according to one embodiment of the present invention;
Figure 2 is a perspective view of a carriage body forming part of the clamp-holding carriage of Figure 1;
Figure 3 is a cross-section view of the clamp-holding carriage of Figure 1 installed on a supporting rocker arm of the automatic horizontal flexible container forming and filling machine;
Figure 4 is a schematic front view illustrating a rocking mechanism of the automatic horizontal flexible container forming and filling machine imparting opening and closing movements to two clamp-holding carriages such as that of Figure 1; and
Figure 5 is a schematic side view illustrating a reciprocating mechanism of the automatic horizontal flexible container forming and filling machine imparting forward and backward movements to two clamp-holding carriages such as that of Figure 1.

### Detailed Description of an Embodiment

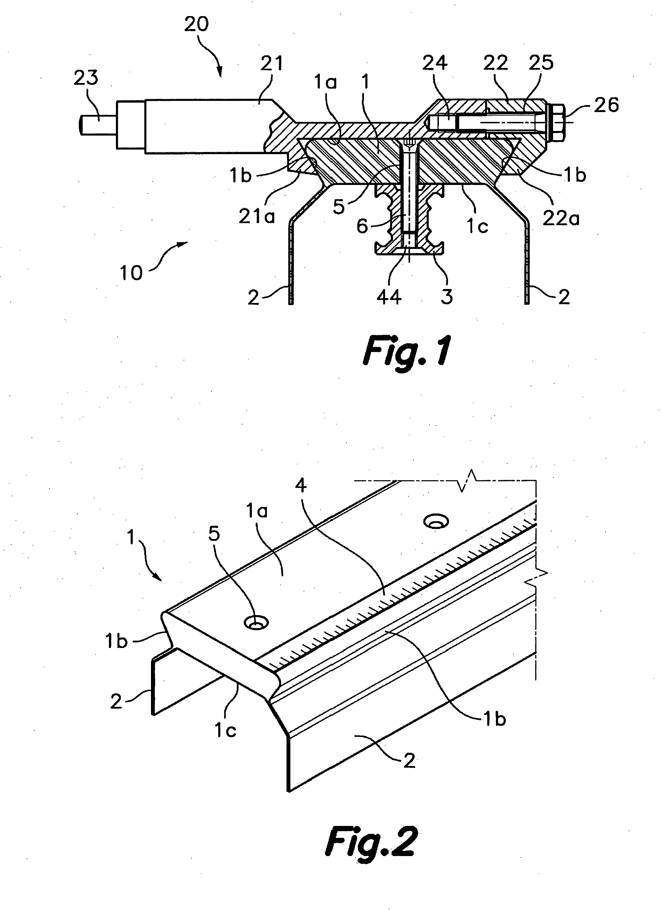

In relation to Figure 1, reference number 10 designates a clamp-holding carriage for an automatic horizontal flexible container forming and filling machine according to one embodiment of the present invention, which comprises a carriage body 1 elongated in a longitudinal direction (perpendicular to the plane of the drawing in Figure 1), which is the forward movement direction of the flexible containers, clamping members 20 fixed on the carriage body 1 and arranged transversely with respect to said longitudinal direction, and a guide profile 3 parallel to the longitudinal direction fixed to a lower side of the carriage body 1.

Figure 2 shows only the carriage body 1 which is made of a single polymer-impregnated carbon fiber part and has a substantially planar upper surface 1a, side surfaces 1b forming acute angles with said upper surface 1a, a lower surface 1c substantially parallel to the upper surface, and side skirts 2 extending downwardly from the junction of lower ends of said side surfaces 1b with the lower surface 1c. The side surfaces 1b of the carriage body 1 have inclinations converging from the top to the bottom. The carriage body 1 has through holes 5 from the upper surface 1a to the lower surface 1c.

The carriage body 1 has a thin foil strip 4, made of a metal material, for example, preferably stainless steel, attached along its upper surface 1a by means of adhesive, for example. This foil strip 4 has position indications marked at regular intervals along same and serves as aid in positioning the clamping members 20. The foil strip 4 is optional.

Returning to Figure 1, the guide profile 3 is fixed to the lower surface 1c of the carriage body 1 by means of screws 6 installed through the through holes 5 of the carriage body 1 and screwed into threaded holes 44 of the guide profile 3, such that the guide profile 3 is arranged between the skirts 2 of the carriage body 1.

Each of the clamping members 20 comprises a front element 21 and a rear element 22. The front element 21 has a grasping tip 23 at its front end, a threaded hole 24 perpendicular to the longitudinal direction at its rear end, and a first securing pawl 21a in a lower portion. The rear element 22 has a through hole 24 from a front end to a rear end coaxial with said threaded hole 25 of the front element 21, and a second securing pawl 22a in a lower portion.

In an operative situation, the front element 21 and the rear element 22 are fixed to one another by a fixing screw 26 installed through the through hole 25 of the rear element 22 and screwed into the threaded hole 24 of the front element 21. The first and second securing pawls 21a, 22a of the front and rear elements 21, 22 of the clamping member 20 have inclinations conjugated with inclinations of the side surfaces 1b of the carriage body 1, and when the fixing screw 26 is tightened the first and second securing pawls 21a, 22a act like a jaw locking the clamping member 20 in a desired position on the carriage body 1.

Advantageously, the front element 21 including the first securing pawl 21a is made of a first molded plastic part, and the rear element 22 including the second securing pawl 22a is made of a second molded plastic part.

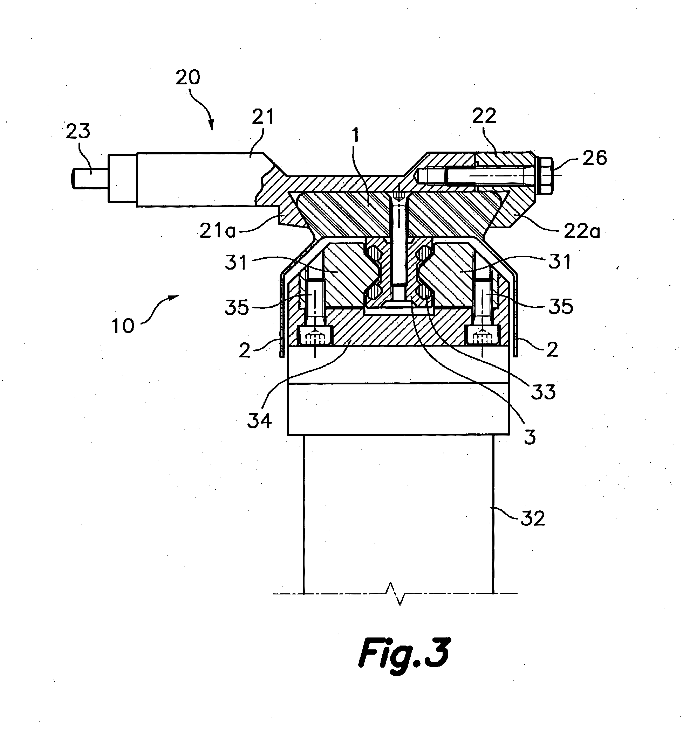

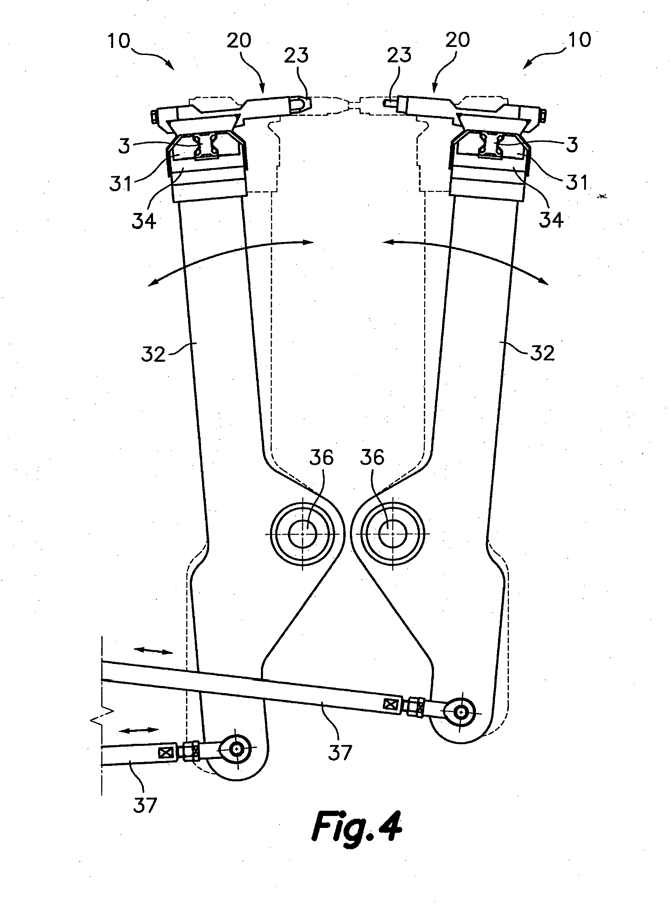

Figure 3 shows the clamp-holding carriage 10 with the guide profile 3 slidingly coupled to guiding bases 31 fixed to a base support 34 by means of fixing screws 35. The guide profile 3 and guiding bases 31 are commercially available conjugated components and are provided with rolling or sliding elements 33 arranged between both. The base support 34 has an elongated configuration in the longitudinal direction and is fixed at the upper ends of a group of supporting rocker arms 32, as will be described below in relation to Figure 4. The clamp-holding carriage can therefore experience forward and backward movements along the guiding bases 31 fixed to the base support 34.

Figure 4 shows two groups of supporting rocker arms 32 having an essentially symmetrical configuration installed such that they can rock about respective shafts 36 parallel to the longitudinal direction. Only one supporting rocker arm 32 of each group can be seen in Figure 4 since the rocker arms of each group are aligned with one another. A corresponding clamp-holding carriage 10 is installed at the upper ends of the supporting rocker arms 32 of each of the two groups in the manner described above in relation to Figure 3, with the particularity that the clamping members 20 of both clamp-holding carriages 10 are arranged symmetrically and facing one another, forming pairs of clamps.

Each of the two supporting rocker arms 32 is connected in an articulated manner to an operating member 37 of a rocking mechanism (not shown) imparting substantially symmetrical rocking movements about the respective shafts 36 to the two groups of supporting rocker arms 32. These rocking movements provide the clamp-holding carriages 10 with opening and closing movements between an open position (shown by continuous lines in Figure 4), in which the clamping members 20 of each pair are separated, and a closed position (shown by discontinuous lines in Figure 4), in which the clamping members 20 of each pair are adjacent to one another with their grasping tips 23 in mutual contact to hold a flexible container (not shown) between both. Optionally and conventionally, the grasping tip 23 of one of the clamping members 20 of each pair is retractable against an elastic element. The rocking mechanism itself is known and is not part of the present invention.

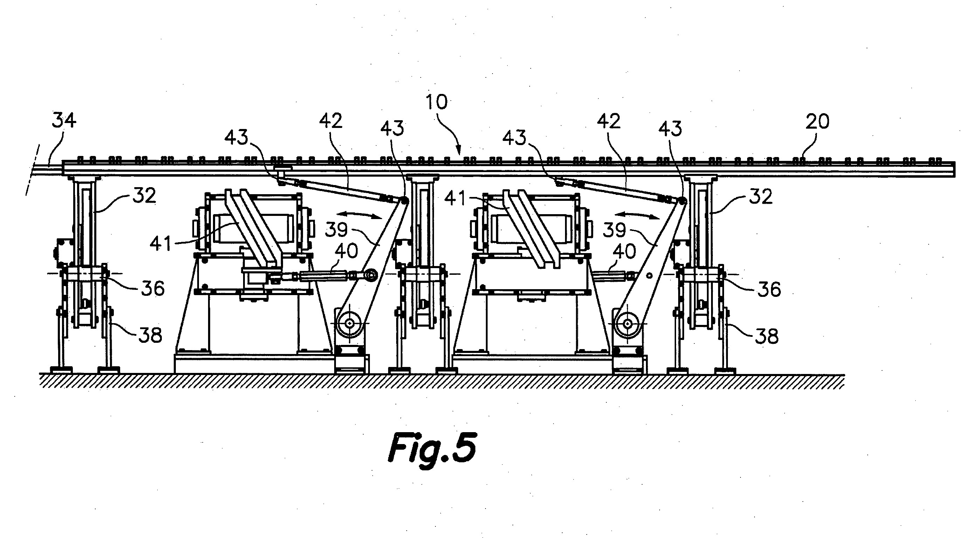

Figure 5 shows two groups of supporting rocker arms 32 (only one of which can be seen as they are aligned with one another) with their shafts 36 supported in respective support structures 38. The two groups of supporting rocker arms 32 have the respective base supports 34 fixed thereto with the respective clamp-holding carriages 10 slidingly coupled thereto (where only one of the base supports 34 and one of the clamp-holding carriages 10 can be seen as they are aligned with one another). The forward and backward movements of the two clamp-holding carriages 10 are simultaneously operated by respective reciprocating mechanisms, each of which comprises an operating rocker arm 39 activated by a connecting rod 40 operated by a cylinder cam 41.

Each operating rocker arm 39 is connected to its corresponding clamp-holding carriage 10 by a transmission connecting rod 42. The ends of the transmission connecting rods 42 are connected to the corresponding clamp-holding carriages 10 and the corresponding operating rocker arms 39 by means of ball joints 43 to accommodate the opening and closing movements of the clamp-holding carriages 10.

Therefore, the rocking and reciprocating mechanisms impart coordinated cyclic movements to the clamp-holding carriages 10, where each cycle includes a closing movement for gripping a group of individual flexible containers by means of the pairs of clamping members 20, a forward movement for conveying individual flexible containers, an opening movement for releasing individual flexible containers, and a backward movement for returning to the initial position.

The scope of the present invention is defined in the attached claims.

## Claims

1. A clamp-holding carriage for an automatic horizontal flexible container forming and filling machine, comprising a carriage body (1) elongated in a longitudinal direction, said carriage body (1) having an upper surface (1a), side surfaces (1b) forming acute angles with said upper surface (1a), and side skirts (2) extending downwardly from lower ends of said side surfaces (1b), clamping members (20) fixed transversely to said side surfaces (1b) of the carriage body (1) by securing pawls (21a, 22a), and a guide profile (3) parallel to said longitudinal direction fixed to a lower surface (1c) of the carriage body (1) between said skirts (2) and configured for being slidingly coupled to guiding bases (31) supported in supporting rocker arms (32) provided with rocking movement with respect to an axis parallel to the longitudinal direction, **characterized in that** the carriage body (1), including the upper surface (1a), the side surfaces (1b), said lower surface (1c) and the skirts (2), is made of a single polymer-impregnated carbon fiber part.

2. The clamp-holding carriage according to claim 1, **characterized in that** each of said clamping members (20) comprises a front element (21) having a first one of said securing pawls (21a) and a rear element (22) having a second one of the securing pawls (22a), where said front element (21) including the first securing pawl (21a) is made of a first molded plastic part and/or said rear element (22) including the second securing pawl (22a) is made of a second molded plastic part, said front and rear elements (21, 22) being fixed to one another by a fixing screw (26).

3. The clamp-holding carriage according to claim 1, **characterized in that** the carriage body (1) has a foil strip (4) attached along its upper surface (1a), said foil strip (4) having position indications marked at regular intervals along same.

4. The clamp-holding carriage according to claim 3, **characterized in that** the foil strip (4) is made of a metal material.
